# EUROPEAN PATENT SPECIFICATION

(11) **EP 0 888 960 B1**
(45) Date of publication and mention of the grant of the patent: **15.09.2004**
(21) Application number: 98110690.9
(22) Date of filing: 10.06.1998
(51) Int. Cl.: B62M 23/02, B62J 6/00

(54) **Electric power supply control apparatus for a motor assisted vehicle**
Steuereinrichtung zur Regelung der Stromversorgung eines Fahrzeugs mit Hilfsmotor
Dispositif de commande de l'alimentation électrique pour véhicule avec moteur auxiliaire

(30) Priority: 03.07.1997 JP 17847697; 11.09.1997 JP 24681797
(43) Date of publication of application: 07.01.1999
(73) Proprietor: Honda Giken Kogyo Kabushiki Kaisha, Minato-ku, Tokyo (JP)
(72) Inventor: Kawaguchi, Kenji, 4-1, Chuo 1-chome, Wako-shi, Saitama (JP); Cho, Toshiyuki, 4-1, Chuo 1-chome, Wako-shi, Saitama (JP)
(74) Representative: Liska, Horst, Dr.-Ing.

(56) References cited:
- EP-A- 0 729 880
- WO-A-97/01103
- DE-A- 19 600 243
- US-A- 5 416 702

## Description

The present invention relates to a motor assisted vehicle with an electric power supply control apparatus for controlling electric power supplied to an electric motor and a lamp in a motor assist vehicle, as defined in the preamble of claim 1, according to EP-A2-0 729 880. There, no lamp is disclosed.

In another conventional motor assist bicycle, electric power is supplied to an electric motor and a lamp by a common battery as is the case with one disclosed in Japanese Patent Laid-open No. Hei8-113186.

By the way, in order to operate an electric motor employed in a motor assist bicycle, the battery is required to supply a voltage higher than a predetermined fixed level. If the battery continues to supply electric power to the electric motor even if the voltage thereof drops below the predetermined level, not only does the electric motor not operate effectively, but electric power of the battery will also be discharged excessively. For this reason, when the voltage of the battery drops below the predetermined level, in the conventional motor assist bicycle, the supplying of electric power to the electric motor is halted and electric power assistance by the electric motor is discontinued.

On the other hand, a motor assist bicycle can be driven only by strength of the driver in the absence of assistance provided by the electric motor. During a night run of an electric motor assist bicycle driven only by strength of the driver, however, a lamp thereof is not turned on, causing an inconvenience.

It is thus an object of the present invention addressing the problems described above to provide a motor assist vehicle with an electric power supply control apparatus for controlling electric power supplied to an electric motor of the vehicle so as to prevent electric power from being discharged excessively from a battery serving as a source of electric power and for allowing a lamp of the vehicle to be turned on even in the absence of assistance provided by the electric motor.

In order to achieve the object described above, according to claim 1 of the present invention, there is provided a motor assisted vehicle with an electric power supply control apparatus for controlling electric power supply in the motor assist vehicle comprising:
An input torque detecting means for detecting an input torque generated by strength of the driver;
an electric motor capable of generating assist power in accordance with a value detected by said input torque detecting means;
a battery for supplying electric power to said electric motor; and
a control means whereby, when a voltage generated by said battery drops below a first predetermined level, supplying of electric power to said electric motor is halted characterized by a lamp supplied by the battery with electrical power, wherein the control means halts supplying of electric power to said lamp, when said voltage of said battery drops below a second predetermined level further lower than said first predetermined level.

According to the configuration described above, when the voltage of the battery drops below the first predetermined level, supplying of electric power to the electric motor is halted. As a result, it is possible to prevent electric power from being discharged excessively from the battery to the electric motor, a relatively heavy load to the battery. In addition, the lamp of the motor assist vehicle with a relatively light load applied to the battery, is turned on till the voltage of the battery drops below the second predetermined level which is further lower than the first predetermined level. Thus, the lamp of the motor assist vehicle, which is currently powered only by strength of the driver, can be turned on even in the absence of assistance provided by the electric motor.

According to claim 2 of the present invention, in the electric power supply control apparatus claimed as claim 1, as a predetermined period of time lapses since last detection of an input torque by the input torque detecting means, the control means forcibly cuts off supplying of electric power from the battery to the lamp. As a result, with the motor assist vehicle halted, supplying of electric power from the battery to the lamp is forcibly cut off as the predetermined period of time lapses even if the driver has forgotten to turn off a main switch or somebody turns on a lamp switch for fun. In this way, it is possible to prevent electric power of the battery from being consumed wastefully.

The present invention will become more apparent from a careful study of the following detailed description of some preferred embodiments with reference to accompanying diagrams.
Fig. 1 is a circuit diagram showing an electric power supply control apparatus as implemented by a first embodiment of the present invention.
Fig. 2 is a flowchart representing a control procedure adopted by a control means employed in the electric power supply control apparatus shown in Fig. 1.
Fig. 3 is a circuit diagram showing an electric power supply control apparatus supplying electric power to an electric motor and a lamp as implemented by a second embodiment of the present invention.
Fig. 4 is a circuit diagram showing an electric power supply control apparatus supplying electric power to an electric motor and a lamp as implemented by a third embodiment of the present invention.
Fig. 5 is a diagram showing a front view of a key switch employed in a fourth embodiment.
Fig. 6 is a circuit diagram showing an electric power supply control apparatus supplying electric power to an electric motor and a lamp as implemented by a fourth embodiment of the present invention.
Fig. 7 is a circuit diagram showing an electric power supply control apparatus supplying electric power to an electric motor and a lamp as implemented by a fifth embodiment of the present invention.
Fig. 8 is a circuit diagram showing an electric power supply control apparatus supplying electric power to an electric motor and a lamp as implemented by a sixth embodiment of the present invention.
Fig. 9 is a circuit diagram showing an electric power supply control apparatus supplying electric power to an electric motor and a lamp as implemented by a seventh embodiment of the present invention.

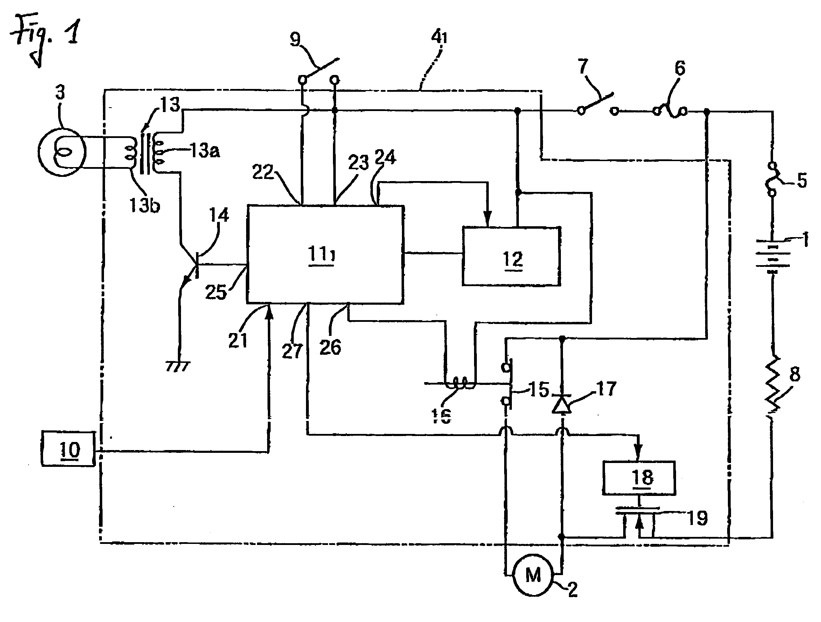

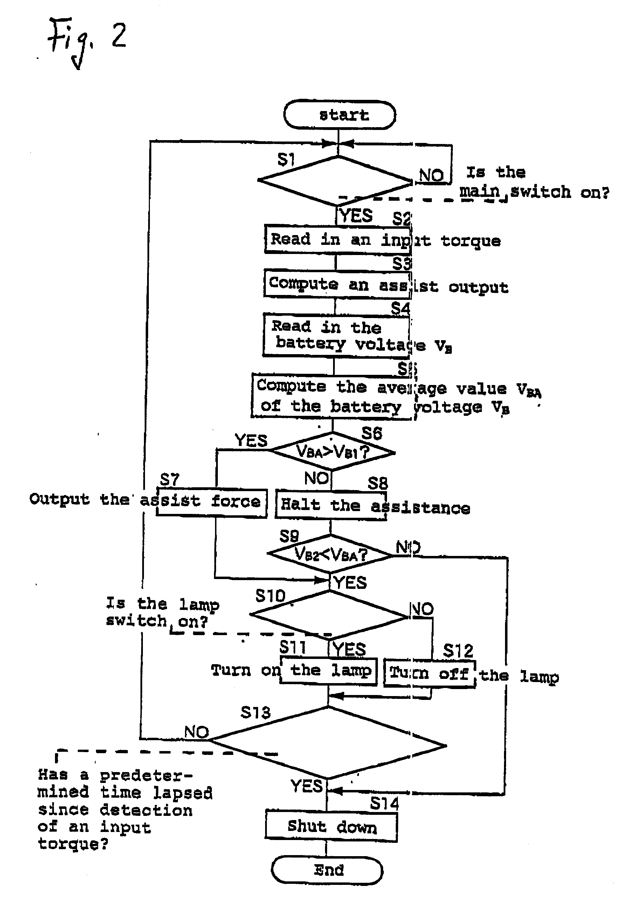

Figs. 1 and 2 are diagrams both showing a first embodiment of the present invention. To be more specific, Fig. 1 is a circuit diagram showing an electric power supply control apparatus and Fig. 2 is a flowchart representing a control procedure adopted by a control means.

In the electric power supply control apparatus 4₁ shown in Fig. 1, electric power generated by a battery 1 mounted on a motor assist vehicle such as a motor assist bicycle can be supplied to an electric motor 2 for generating an assist force and a lamp 3 such as a head light. Electric power supplied by the battery 1 to the electric motor 2 and the lamp 3 is controlled by the electric power supply control apparatus 4₁.

The battery 1 has a rated voltage of typically 24 V. A plus terminal of the battery 1 is connected to the electric power supply control apparatus 4₁ through a series circuit comprising a first fuse 5 with a current capacity of typically 30 A, a second fuse 6 with a current capacity of typically 1 A and a main switch 7 in this order. On the other hand, a minus terminal of the battery 1 is connected to the electric power supply control apparatus 4₁ through a resistor 8.

Also connected to the electric power supply control apparatus 4₁ are a lamp switch 9 and an input torque detecting means 10 for detecting an input torque generated by strength of the driver.

The electric power supply control apparatus 4₁ comprises a control means 11₁, a power supply circuit 12, a pulse transformer 13, a transistor 14, a relay switch 15, a relay coil 16 for putting the relay switch 15 in a conductive and non-conductive states, a diode 17, a driving circuit 18 and a FET 19.

The control means 11₁ is implemented by a microcomputer which has a first input terminal 21 for inputting a torque detection signal generated by the input torque detecting means 10, a second input terminal 22 for inputting an on / off signal of the lamp switch 9, a third input terminal 23 for inputting a voltage generated by the battery 1, a first control terminal 24 for outputting a control signal to the power supply circuit 12, a second control terminal 25 for outputting a signal turning the transistor 14 on and off, a third control terminal 26 for magnetizing or demagnetizing the relay coil 16 and a fourth control terminal 27 for outputting a control signal to the driving circuit 18.

The power supply circuit 12 is used for changing a voltage appearing on a line between the main switch 7 and the primary coil 13a of the pulse transformer 13 from 24 V to a regulated voltage of 5 V which is supplied to the control means 11₁. The control means 11₁ is capable of cutting off electric power supplied thereto by the power supply circuit 12 by outputting a control signal through the first control terminal 24 of the control means 11₁ to the power supply circuit 12.

The pulse transformer 13 comprises the primary coil 13a and a secondary coil 13b connected to the lamp 3. The primary coil 13a is connected to the main switch 7. The other end of the primary coil 13a is connected to the transistor 14, the emitter of which is grounded. One end of the transistor 14 is turned on and off by a control signal output by the control means 11₁ through the second control terminal 25. With the main switch 7 put in a conductive state, the transistor 14 is turned on and off repeatedly to generate a pulse voltage which is applied to the primary coil 13a. As a result, a relatively low pulse voltage is induced along the secondary coil 13b and applied to the lamp 3. The pulse transformer 13 is needed to transform the relatively high rated voltage generated by the battery 1 originally for driving the electric motor 2 into a low voltage supplied to the lamp 3 having a relatively low rated voltage.

The lamp switch 9 is used for connecting the second input terminal 22 of the control means 11₁ to a point between the primary coil 13a of the pulse transformer 13 and the main switch 7. When the main switch 7 is put in a conductive state, turning on the lamp switch 9 will cause a high level signal to be supplied to the second input terminal 22 of the control means 11₁. The high level signal informs the control means 11₁ that the lamp switch 9 is on.

The third input terminal 23 of the control means 11₁ is connected to a point between the primary coil 13a of the pulse transformer 13 and the main switch 7. When the main switch 7 is put in a conductive state, the control means 11₁ is capable of detecting the voltage of the battery 1 which is supplied thereto through the third input terminal 23.

The relay switch 15 connects one terminal of the electric motor 2 to a point between the first and second fuses 5 and 6. The FET 19 is connected between the other terminal of the electric motor 2 and the resistor 8. The diode 17 connects the other terminal of the electric motor 2 to the point between the first and second fuses 5 and 6. The relay coil 16 for turning the relay switch 17 on and off connects the third control terminal 26 of the control means 11₁ to a point between the primary coil 13a of the pulse transistor 13 and the main switch 7.

The driving circuit 18 varies a voltage applied to the gate of the FET 19 in accordance with a control signal output by the control means 11₁ through the fourth control terminal 27 in order to control the output of the electric motor 2. The control signal output by the control means 11₁ through the fourth control terminal 27 is varied by the control means 11₁ in accordance with a detection signal generated by the input torque detecting means 10, controlling the output of the electric motor 2, that is, the electric power assist force.

Fig. 2 is a flowchart representing a control procedure adopted by the control means 11₁ for controlling the supplying of electric power to the electric motor 2 and the lamp 3. As shown in the figure, the flowchart begins with a step S1 to form a judgment as to whether the main switch 7 is turned on (put in a conductive state) or turned off (put in a non-conductive state). If the main switch 7 is put in a conductive state, the flow of the procedure goes on to a step S2 at which a detected value of an input torque output by the input torque detecting means 10 is read in. The flow of the procedure then proceeds to a step S3 at which an assist force to be output by the electric motor 2, that is, an assist power corresponding to the detected value of the input torque, is calculated.

Then, the flow of the procedure continues to a step S4 at which the voltage V_{B} generated by the battery 1 is read in through the third input terminal 23. The flow of the procedure then goes on to a step S5 at which an average value V_{BA} of the battery voltage V_{B} over a predetermined period of time is computed.

The flow of the procedure then proceeds to a step S6 to form a judgment as to whether the average voltage V_{BA} of the battery voltage V_{B} is higher than or does not exceed a first set value V_{B1}. If the average voltage V_{BA} is found higher than the first set value V_{B1} (V_{BA} > V_{B1}), the flow of the procedure goes on to a step S7 to drive the electric motor 2 to output an assist force calculated at the step S3. If the average voltage V_{BA} of the battery voltage V_{B} does not exceed the first set value V_{B1} (V_{BA} ≦ V_{B1}), on the other hand, the flow of the procedure continues to a step S8 at which the control signal output through the third control terminal 26 is set at a high level to turn off the relay switch 15 so that the operation of the electric motor 2 is halted. The first set value V_{B1} represents a minimum voltage required to effectively operate the electric motor 2. The first set value V_{B1} is typically 18 V.

After halting the operation of the electric motor 2 at the step S8, the flow of the procedure goes on to a step S9 to form a judgment as to whether or not the average voltage V_{BA} of the battery voltage V_{B} is higher than a second set value V_{B2} of typically 14 V which is lower than the first set value V_{B1}. If the outcome of the judgment indicates that the average voltage V_{BA} is higher than the second set value V_{B2} (V_{B2} < V_{BA} ≦ V_{B1}), the flow of the procedure goes on from the step S9 to a step S10. After driving the electric motor 2 to output the assist force at the step S7, the flow of the procedure proceeds directly to the step 10, by passing the step S9.

At the step S10, the control means 11₁ forms a judgment as to whether the lamp switch 9 is on (in a conductive state) or off (in a non-conductive state). If the lamp switch 9 is on, the flow of the procedure goes on to a step S11 at which the lamp 3 is turned on. If the lamp switch 9 is off, on the other hand, the flow of the procedure goes on to a step S12 at which the lamp 3 is turned off.

The flow of the procedure then continues to a step S13 to form a judgment as to whether or not a predetermined period of time of typically 30 minutes has lapsed since the last detection of an input torque by the input torque detecting means 10 or since the time the motor assist bicycle was put in a halted state. If the predetermined period of time has lapsed, the flow of the procedure continues to a step S14 to cut off the supplying of electric power from the electric power circuit 12 to the control means 11₁, shutting down the control executed by the control means 11₁. As a result, the control means 11₁ no longer outputs the control signals to the control terminals 24 to 27, forcibly halting the electric motor 2 and forcibly turning the lamp 3 off.

If the outcome of the judgment formed at the step S9 indicates that the average voltage V_{BA} is not higher than the second set value V_{B2} (V_{BA} ≦ V_{B2}), on the other hand, the flow of the procedure goes on to the step S14 directly.

Next, the operation of the first embodiment is explained. When the average value V_{BA} of the battery voltage V_{B} becomes equal to or goes below the first set value V_{B1}, the supplying of the electric power to the electric motor 2 is halted to prevent current from being discharged from the battery 1 due to supplying of electric power to the electric motor 2, a load relatively heavy for the current voltage V_{B} of the battery 1. On the other hand, the lamp 3, a load relatively light for the battery 1, can be kept in a turned-on state as long as the lamp switch 9 is on till the average voltage V_{BA} of the battery 1 goes below the second set value V_{B2} which is lower than the first set value V_{B1}. As a result, when the motor assist bicycle is driven by only strength of the driver without being assisted by power output by the electric motor 2, the lamp 3 can be turned on, allowing the motor assist bicycle to be driven by only strength of the driver in the night.

In addition, when the predetermined period of time has lapsed since the last detection of an input torque by the input torque detecting means 10 or since the time the motor assist bicycle was put in a halted state, the supplying of electric power supplied to the electric motor 2 and the lamp 3 from the battery 1 is forcibly halted. As a result, it is possible to prevent electric power of the battery 1 from being consumed wastefully and, thus, to prevent electric charge of the battery 1 from being excessively discharged even if the driver has forgotten to turn off the main switch 7 or somebody turns on the lamp switch 9 for fun.

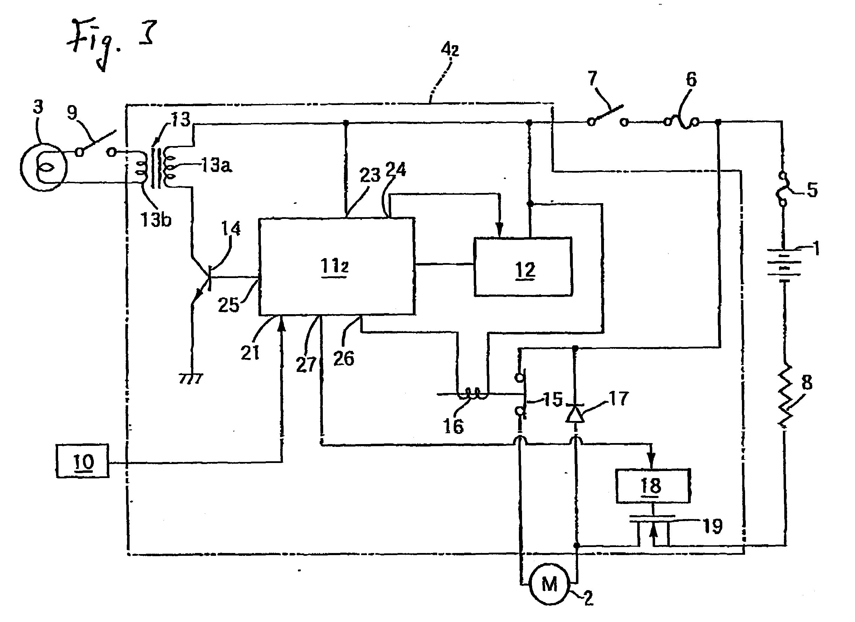

Fig. 3 is a circuit diagram showing a second embodiment implementing an electric power supply control apparatus provided by the present invention. As shown in the figure, the lamp switch 9 can be provided between the secondary coil 13b of the pulse transformer 13 and the lamp 3. In this configuration, a control means 11₂ employed in the electric power supply control apparatus 4₂ does not have an input terminal for inputting a signal indicating whether the lamp switch 9 is on or off. Instead, the control means 11₂ outputs a control signal for turning the transistor 14 on and off through the second control terminal 25 in accordance with whether the main switch 7 is on or off. With the transistor 14 turned on, the lamp 3 can be turned on and off by operating the lamp switch 9. If the transistor 14 is turned off by the control signal output from the second control terminal 25, on the other hand, the lamp 3 stays in an turned-off state without regard to whether the lamp switch 9 is on or off.

According to the second embodiment, the number of connection terminals provided to the electric power supply control apparatus 4₂ can be reduced.

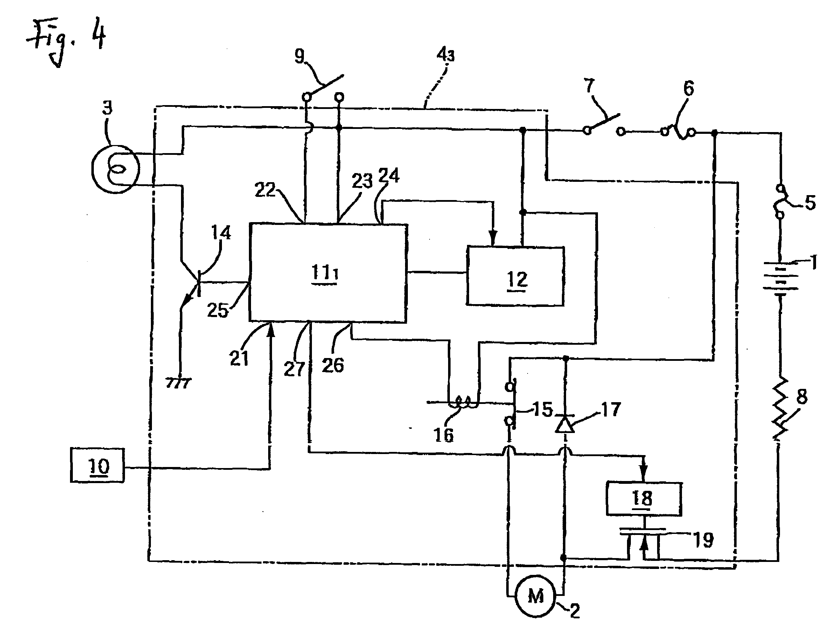

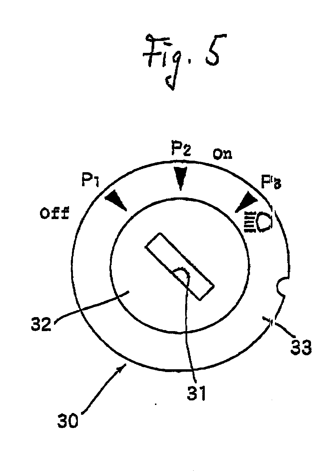

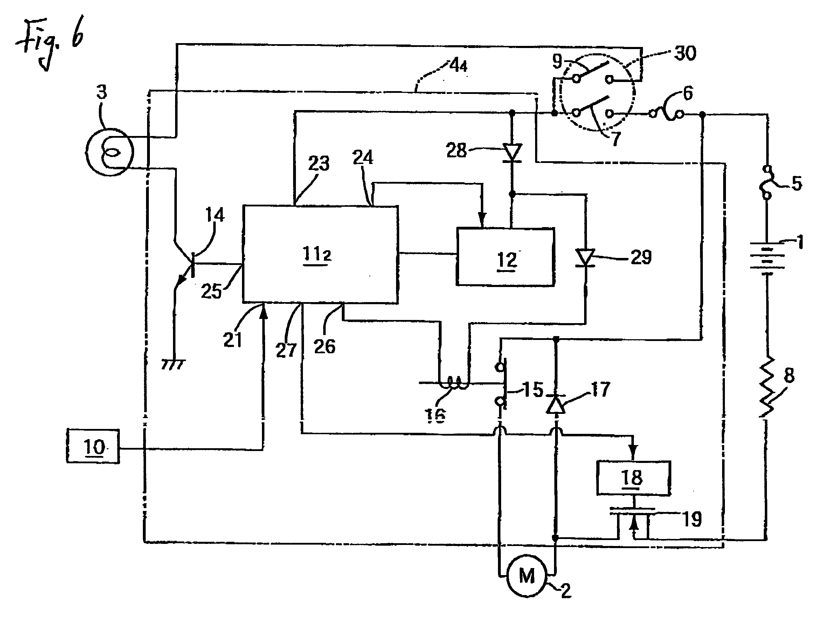

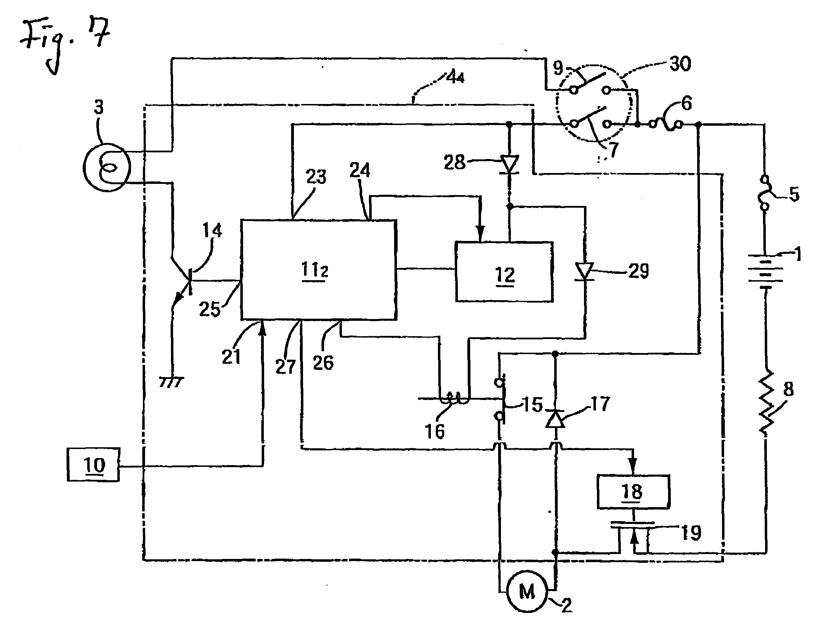

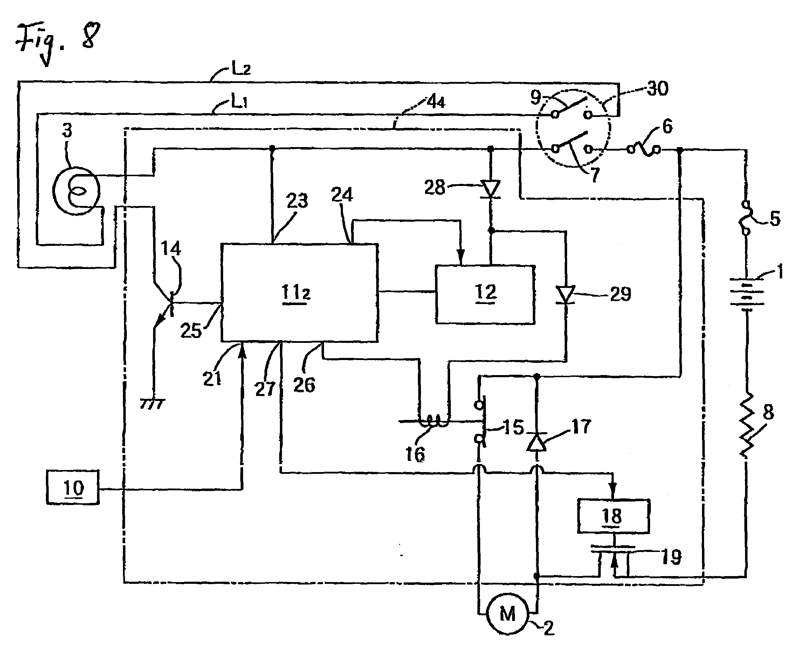

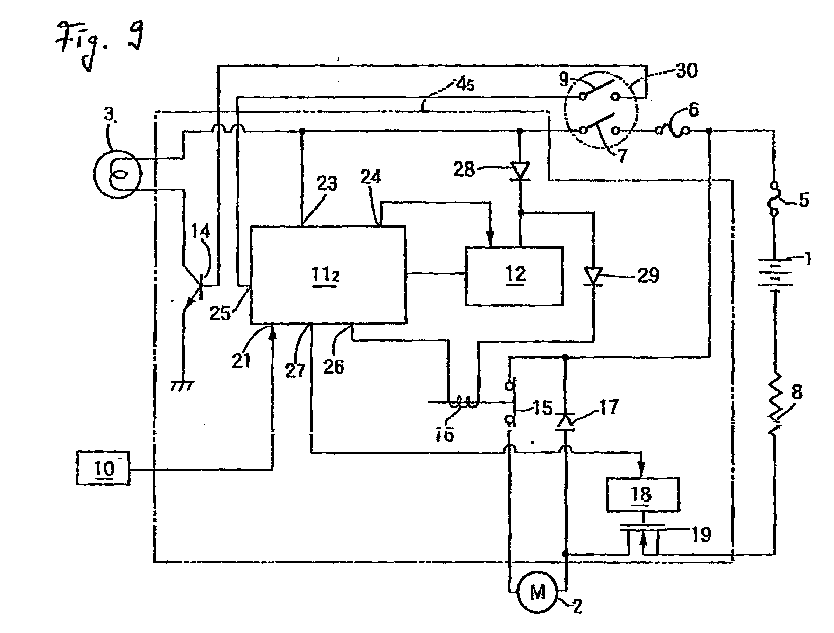

Fig. 4 is a circuit diagram showing a third embodiment implementing an electric power supply control apparatus provided by the present invention. As shown in the figure, the pulse transformer 13 employed in the first and second embodiments is omitted from the electric power supply control apparatus 4₃ implemented by the third embodiment. In addition, the lamp 3 and the transistor 14 are connected in series to the main switch 7. In such a circuit, the transistor 14 is turned on and off repeatedly by a signal output by the control means 11₁ through the second control terminal 25 to execute chopping control on the lamp 3.

The third embodiment is capable of providing the same effect as the first and second embodiments described previously.

By the way, in the embodiments described above, the main switch 7 and the lamp switch 9 are turned on and off independently of each other. Since the lamp 3 is turned off automatically when the main switch 7 is put in a non-conductive state, it is quite within the bounds of possibility that the driver forgets to turn off the lamp switch 9. Thus, when the driver turns the main switch 7 again during the day time on the following day after the driver halted the electric motor assist bicycle on the day before, the lamp 3 is automatically turned on because the lamp switch 9 has been remaining in a conductive state so far with the driver being unaware of the newly set on state of the lamp 3. As a result, electric power is consumed wastefully.

In order to solve the problem described above, a fourth embodiment implementing an electric power supply control apparatus provided by the present invention is introduced. Fig. 5 is a diagram showing a key switch 30 employed in the fourth embodiment and Fig. 6 is a diagram showing an electrical circuit of the fourth embodiment.

As shown in Fig. 5, the key switch 30 comprises a rotor 32 having a key hole 31 and a housing 33 for keeping the rotor 32 in a rotatably engaged state. A key inserted into the key hole 31 can be rotated to be placed at a first position P₁, a second position P₂ or a third position P₃, hence, rotating the rotor 32. It should be noted that the key itself is not shown in the figure. The second position P₂ is separated from the first position P₁ in the clockwise direction in Fig. 5 by a gap. By the same token, the third position P₃ is separated from the second position P₂ in the clockwise direction in Fig. 5 by a gap.

The key switch 30 allows the main switch 7 and the lamp switch 9 to be put in conductive and non-conductive states. To put it in detail, with the key placed at the first position P₁, the main switch 7 and the lamp switch 9 are put in a non-conductive state. With the key placed at the second position P₂, on the other hand, the main switch 7 is put in a conductive state while the lamp switch 9 is put in a non-conductive state. Finally, with the key placed at the third position p₃, the lamp switch 9 is put in a conductive state with the main switch 7 remaining conductive as well.

The input terminal 23 of the control means 11₂ employed in the electric power supply control apparatus 4₄ is connected to the second fuse 6 by the main switch 7. A diode 28 is connected between the power supply circuit 12 and a point of connection between the input terminal 23 and the main switch 7. A diode 29 is connected between the relay coil 16 and a point of connection between the diode 28 and the power supply circuit 12.

The lamp switch 9 is connected between one terminal of the lamp 3 and a point of connection between the input terminal 23 and the main switch 7. The other terminal of the lamp 3 is connected to the transistor 14 which is turned on and off by a control signal output from the control terminal 25 of the control means 11₂.

According to the fourth embodiment, when the key inserted into the key hole 31 to rotate the rotor 32 is placed at the first position P₁, putting the main switch 7 in a non-conductive state, the lamp switch 9 is also put in a non-conductive state inevitably. As a result, there is no way that the driver forgets to turn the lamp 3 off. In addition, since the main switch 7 and the lamp switch 9 share a common contact point, the number of contact points can be reduced.

Fig. 7 is a diagram showing an electrical circuit of a fifth embodiment of the present invention. As shown in the figure, the lamp switch 9 is connected between the lamp 3 and a point of connection between the main switch 7 and the second fuse 6. Much like the fourth embodiment described above, according to the 5th embodiment, there is no way that the driver forgets to turn the lamp 3 off. In addition, since the main switch 7 and the lamp switch 9 also share a common contact point, the number of contact points can be reduced.

Fig. 8 is a diagram showing an electrical circuit of a sixth embodiment of the present invention. As shown in the figure, the main switch 7 of the key switch 30 is connected between one terminal of the lamp 3 and the second fuse 6. On the other hand, the lamp switch 9 is connected between the other terminal of the lamp 3 and the transistor 14.

In the configuration described above, since the lamp switch 9 is a switch for connecting the lamp 3 to an earth line, the number of contact point sparks generated in the lamp switch 9 can be reduced and the contact point capacity thereof can be made smaller.

Fig. 9 is a diagram showing an electrical circuit of a seventh embodiment of the present invention. In the figure, components identical with those employed in the embodiments described so far are denoted by the same reference numerals as the latter.

The main switch 7 of the key switch 30 is connected between one terminal of the lamp 3 and the second fuse 6. The other terminal of the lamp 3 is connected to the ground by the transistor 14 of the electric power supply control apparatus 4₅. The control terminal 25 of the control means 11₂ employed in the electric power supply control apparatus 4₅ is connected to the base of the transistor 14 by the lamp switch 9 of the key switch 30.

In the seventh embodiment, the lamp switch 9 is used for flowing a signal output by the control terminal 25 of the control means 11₂ to turn the transistor 14 on and off. Thus, the magnitude of a current flowing through the lamp switch 9 is relatively small. As a result, the number of contact point sparks generated at the lamp switch 9 can be reduced and the contact point capacity thereof can be made smaller.

The embodiments of the present invention have been described in detail so far. It should be noted that the description is not intended to be construed in a limiting sense. That is to say, the scope of the present invention is not limited to the embodiments described above. In other words, a variety of design changes can be made to the embodiments without departing from inventions described in appended claims.

For example, while the embodiments implementing the electric power supply control apparatus are applied to a motor assist bicycle, the present invention is also applicable to a motor assist chair and is, as a matter of fact, widely applied to a motor assist vehicle wherein electric power is supplied by a common battery to a lamp and an electric motor for generating an assist force for assisting strength of the driver.

According to claim 1 of the present invention, when the voltage of a battery drops below a first predetermined level, supplying of electric power to an electric motor is halted. As a result, it is possible to prevent electric power from being discharged excessively from the battery to the electric motor, a relatively heavy load to the battery. In addition, a lamp of the motor assist vehicle with a relatively light load applied to the battery, is turned on till the voltage of the battery drops below a second predetermined level which is further lower than the first predetermined level. Thus, the lamp of the motor assist vehicle, which is currently powered only by strength of the driver, can be turned on even in the absence of assistance provided by the electric motor.

According to claim 2 of the present invention, with the motor assist vehicle halted, supplying of electric power from the battery to the lamp is forcibly cut off as a predetermined period of time lapses even if the driver has forgotten to turn off a main switch or somebody turns on a lamp switch for fun. In this way, it is possible to prevent electric power of the battery from being consumed wastefully.

## Claims

1. Motor assisted vehicle with an electric power supply control appartus for controlling electric power supply in the motor assist vehicle, said apparatus comprising:
an input torque detecting means (10) for detecting an input torque generated by strength of the driver;
an electric motor (2) capable of generating assist power in accordance with a value detected by said input torque detecting means (10);
a battery (1) for supplying electric power to said electric motor (2); and
a control means (11₁, 11₂) whereby, when a voltage generated by said battery (1) drops below a first predetermined level, supplying of electric power to said electric motor (2) is halted,
**characterized by** a lamp (3) supplied by the battery (1) with electrical power, wherein the control means (11₁, 11₂) halts supplying of electric power to said lamp (3), when said voltage of said battery (1) drops below a second predetermined level further lower than said first predetermined level.

2. Motor assisted vehicle with an electric power supply control apparatus according to claim 1, **characterized in that**, as a predetermined period of time lapses since last detection of an input torque by said input torque detecting means (10), said control means (11₁ and 11₂) forcibly cuts off supplying of electric power from said battery (1) to said lamp (3).

## Patentansprüche

1. Motorunterstütztes Fahrzeug mit einer Elektrische-Energiezufuhr-Steuervorrichtung zum Steuern/Regeln der elektrischen Energiezufuhr in dem motorunterstützten Fahrzeug, wobei die Vorrichtung umfasst:
ein Eingangsdrehmomenterfassungsmittel (10) zum Erfassen eines durch die Kraft des Fahrers erzeugten Eingangsdrehmoments;
einen Elektromotor (2), der in der Lage ist, eine Unterstützungskraft entsprechend einem durch das Eingangsdrehmomenterfassungsmittel (10) erfassten Wert zu erzeugen;
eine Batterie (1) zum Zuführen elektrischer Energie zu dem Elektromotor (2); und
ein Steuermittel (11₁, 11₂), wodurch, wenn eine von der Batterie (1) erzeugte Spannung unter einen ersten vorbestimmten Pegel fällt, die elektrische Energiezufuhr zu dem Elektromotor (2) angehalten wird,
**gekennzeichnet durch** eine Lampe (3), die **durch** die Batterie (1) mit elektrischer Energie versorgt wird, worin das Steuermittel (11₁, 11₂) die elektrische Energiezufuhr zu der Lampe (3) anhält, wenn die Spannung der Batterie (1) unter einen zweiten vorbestimmten Pegel fällt, der noch niedriger als der erste vorbestimmte Pegel ist.

2. Motorunterstütztes Fahrzeug mit einer Elektrische-Energiezufuhr-Steuervorrichtung nach Anspruch 1, **dadurch gekennzeichnet, dass** dann, wenn seit der letzten Erfassung eines Eingangsdrehmoments durch das Eingangsdrehmomenterfassungsmittel (10) eine vorbestimmte Zeitperiode abläuft, das Steuermittel (11₁ und 11₂) die elektrische Energiezufuhr von der Batterie (1) zu der Lampe (3) zwangsweise unterbricht.

## Revendications

1. Véhicule avec moteur auxiliaire muni d'un dispositif de commande d'alimentation en courant électrique pour commander une alimentation en courant électrique dans le véhicule avec moteur auxiliaire, ledit dispositif comportant :
des moyens de détection d'un couple d'entrée (10) pour détecter un couple d'entrée généré par une force du conducteur,
un moteur électrique (2) capable de générer une puissance auxiliaire conformément à une valeur détectée par lesdits moyens de détection d'un couple d'entrée (10),
une batterie (1) pour délivrer un courant électrique audit moteur électrique (2), et
des moyens de commande (11₁, 11₂) de sorte que, lorsqu'une tension générée par ladite batterie (1) chute au-dessous d'un premier niveau prédéterminé, l'alimentation en courant électrique dudit moteur électrique (2) est interrompue,
**caractérisé par** une lampe (3) alimentée en courant électrique par la batterie (1), dans lequel les moyens de commande (11₁, 11₂) interrompent l'alimentation en courant électrique de ladite lampe (3), lorsque ladite tension de ladite batterie (1) chute au-dessous d'un second niveau prédéterminé encore inférieur audit premier niveau prédéterminé.

2. Véhicule avec moteur auxiliaire muni d'un dispositif de commande d'alimentation en courant électrique selon la revendication 1, **caractérisé en ce que**, lorsqu'une période de temps prédéterminée s'écoule depuis la dernière détection d'un couple d'entrée par lesdits moyens de détection d'un couple d'entrée (10), lesdits moyens de commande (11₁, 11₂) coupent de manière forcée l'alimentation en courant électrique de ladite lampe (3) par ladite batterie (1).
